# EUROPEAN PATENT APPLICATION

(11) **EP 4 086 612 A1**
(43) Date of publication of application: **09.11.2022**
(21) Application number: 21172910.8
(22) Date of filing: 08.05.2021
(51) Int. Cl.: G01N 21/77, G01N 21/27, G01N 21/45, G01B 9/02

(54) **CALIBRATION FOR AN INTERFEROMETER**

(71) Applicant: Aryballe, 38000 Grenoble (FR)
(72) Inventor: MEUNIER, Nicolas, 38000 Grenoble (FR)
(74) Representative: Schuffenecker, Thierry

(57) **Abstract**

There is described a system comprising: one or more micro Mach-Zehnder Interferometers or MZIs, with receptors (e.g. peptides) to compounds placed in sensing arms of said MZIs, said Mach-Zehnder Interferometers being based on one or more Multi-Mode Interference couplers or MMIs; and a processor configured to : receive data signals from said MMI-based MZI, said data signals comprising at least k sinusoids diphase of 2π/k; expressing said sinusoids in non-centered ellipses; calibrate said sinusoids by centering and circularizing said non-centered ellipses; and determine the angular phase from said centered and circularized ellipses. Described developments comprise the determination of one or more sensorgrams representing interaction kinetics of adsorption and desorption of target compounds with receptors placed in optical paths of the MMI based - MZIs; the determination of one or more signatures associated with one or more odors; the use of diverse MMI types; embodiments wherein sensors are placed in a smartwatch.

## Description

### Technical field

The document provides examples of signal processing, in particular in the technical domain of sensors for odors, e.g. electronic noses.

### Background

An "odor" (American English) or "odour" (British English) is caused by Volatile Organic Compounds (VOCs) and/or molecules emitted by objects in the environment, which can be found in low concentrations in the air that humans and animals can perceive by their sense of smell. Other terms with different connotations can be used e.g. "smell", "scent", "aroma", "fragrance", "perfumes", etc.

Sensors in modern technology are becoming more and more complex. In order to detect and qualify VOCs, some so-called "electronic noses" comprise one or more Mach-Zehnder Interferometers (acronym MZI).

A MZI transducer comprise a coherent light source, a beam splitter which separates the beam in two equal waveguides (1 beam provides 2 beams). The generated two beams are propagating into two waveguides (also called arms) and they may not experience the same optical path due to a difference of refractive index along the two path (or the length in some cases). One beam goes through the reference arm, and the other beam goes through the sensing arm: a phase shift may appear between the two beams. The two beams are then joined again to form constructive or destructive interference, depending on the difference obtained between their respective phases. The response signals of the MZI transducer are then signals measuring phase shifts between the two beams caused by a sample and physisorption of compounds on functionalized sites of the sensing arm. This difference allows the reconstruction of an odor sensorgram.

If signals are not properly processed, proper information can hardly be extracted. Known methods and systems generally present wavelets in the signals which can disturb the interpretation of the useful signals. The situation worsens when the MZI is used within its detection limits (low signal-to-noise ratio).

The article *"*Direct and Sensitive Phase Readout for Integrated Waveguide Sensors" - IEEE Photonics Journal - Volume 5, Number 4, August 2013 - R. Halir, L. Vivien, X. Le Roux, D.-X. Xu, P. Cheben - DOI: 10.1109, discloses integrated optical affinity sensors based on Mach-Zehnder interferometers (MZIs) enabling sensitive and label-free detection of chemical and biological molecules. However, since MZIs transduce optical phase changes into the pulsation (or frequency) of a sinusoidal intensity variations, they exhibit a variable sensitivity issues. Moreover, the direction of phase change cannot be unambiguously determined with these sensors. Here, it is presented a coherent detection scheme based on integrated optics that enables unambiguous readout of the optical phase with a constant sensitivity. The described approach furthermore claims to cancel the effect of imperfections in the sensor hardware using a blind calibration scheme. Such an approach presents limitations.

These MZIs are also not often embedded in wearable and connected devices, wherein additional technical problems arise (e.g. size, energy, computing power, etc).

There is a need for adapting micro-MZIs for wearable or portable uses.

### Summary of the invention

There is described a system comprising: one or more micro Mach-Zehnder Interferometers or MZIs, with receptors (e.g. peptides) to compounds placed in sensing arms of said MZIs, said Mach-Zehnder Interferometers being based on one or more Multi-Mode Interference couplers or MMIs; and a processor configured to : receive data signals from said MMI-based MZI, said data signals comprising at least k sinusoids diphase of 2π/k; expressing said sinusoids in non-centered ellipses (via a k-phases Clarke transformation); calibrate said sinusoids by centering and circularizing said non-centered ellipses; and determine the angular phase from said centered and circularized ellipses. Described developments comprise the determination of one or more sensorgrams representing interaction kinetics of adsorption and desorption of target compounds with receptors placed in optical paths of the MMI based - MZIs; the determination of one or more signatures associated with one or more odors; the use of diverse MMI types; embodiments wherein sensors are placed in a smartwatch.

Advantageously, in an embodiment of the invention, a micro-MZI is coupled or associated to one or more optical MMIs (optical couplers, i.e. splitters and combiners).

Advantageously, in an embodiment of the invention, a MMI is a (2xN) MMI, with two inputs and N outputs.

Advantageously, in an embodiment of the invention, a MMI is a (2x3) MMI, with two inputs and 3 outputs, achieving superior compromises for wearable uses.

Advantageously, embodiments of the invention allow embedding computations in processors with very low computing capacity, by contrast with known ellipse fitting algorithms.

Advantageously, embodiments of the invention allow reducing disturbances which are due to dispersion in the design of the optical system. In particular, this dispersion can be reduced through calibration procedure.

### Brief description of drawings

Embodiments of the present invention will now be described by way of example with reference to the accompanying drawings in which like references denote similar elements, and in which:
FIG. 1 illustrates a Mach-Zehnder Interferometer (MZI);
FIG. 2 illustrates some technical issues associated with an MZI;
FIG.3 shows an MMI(2x3);
FIG.4 shows a 3 phase Clark transformation and the handling of non-centered ellipses.

### Detailed description

An "electronic nose" (irrespective of sensor technology) produces a signal when its sensors interact with an odor. In an embodiment, the "electronic nose" or "analyzing system" comprises a measurement chamber intended to receive the target compounds contained in either gas, liquid or fluid sample, wherein a plurality of separate sensitive sites, each comprising receivers able to interact with the target compounds, is located in said chamber.

In an electronic nose, VOCs (or fluid sample) are generally injected (passively and/or actively) into a chamber with or without inert gas (e.g. argon). Distinct sensor units (of distinct chemical affinity) forming a "multivariate sensor" in the chamber then react to compounds or VOCs or molecules of the fluid sample and from an analog output, a digital output is determined, and further interpreted.

Dimensions of an electronic nose according to the invention correspond to a few squared millimeters.

A "sensorgram" is obtained, comprising substantially parallel curves, each curve being the response of one sensor unit to compounds or VOCs. Amplifiers can be used.

From said sensorgram, a signature is determined (such as a radar chart), said signature being associated with one or more predefined "odors" (interpretation of the presence of compounds can be post-processed).

Databases can be built, in particular in the form of signatures and/or low-dimensional embeddings, i.e. using metric learning, PCA or trained neural networks.

"Sensors" can be unidimensional (1D), bidimensional (2D) or tridimensional (3D). A sensor is a device that transforms a physical, chemical, or biological stimulus into a readable signal.

"Sample" designates gas (e.g. air) or liquids (e.g. human saliva).

"Target compounds" can be characterized by an electronic nose: compounds, VOCs, bacteria, virus, proteins, lipids, non-organic compounds, etc.

A "sensorgram" designates the temporal evolution of data signal, so as to extract interaction kinetics (adsorption and desorption) of target compounds with receptors.

Based on the interaction of odor with sensors, the obtained sensorgram signal is categorized into three different phases: a) absorption, b) equilibrium, and c) desorption.

A sensor unit response generally comprises three phases. At first, only air or neutral inert gas is present: sensor units exhibit a "baseline" level. Then, VOCs start coupling with reagents and the "absorption" phase starts. At a certain moment, after a specific time duration, an "equilibrium" is obtained. Then, triggered by a purge (active removing of VOCs, caused by injecting air and/or other ways such as heating), the phase of "desorption" starts. Molecules leave sensor units (not necessarily symmetrical to the absorption phase). In some situations, the desorption phase can be the first and sometimes only step.

Most often, after equilibrium phase, the obtained signal is transformed into a *signature* by performing the integration over time.

There is described a computer-implemented method comprising the steps of: receiving data signals from an interferometer; accumulating at least p > 2 arches forming k sinusoids with phase shift of 2π/k; calibrating the k sinusoids; determining the angular phase associated with said k sinusoids.

In a development, the method further comprises the steps of: determining a sensorgram associated with the temporal evolution the angular phase; determining interaction kinetics of adsorption and/or desorption of target compounds with receptors, e.g. peptides, placed in the sensing arm of the interferometer.

In a development, the method further comprises the step of determining a signature associated with an odor composed of target compounds.

In a development, the step of calibrating comprises the steps of: iteratively determining intermediate values Maxi and Mini computed over the accumulated sinusoids; determining an offset equal to the mean value of Maxi and Mini; determining a gain equal to 1/(Maxi-Mini); determining a correction gain by determining the maximal gain amongst the determined gains; determining a modified sinusoid by subtracting the respective offsets to the received sinusoid, multiplied by the ratio of the correction gain by the maximum gain.

In a development, the step of calibrating comprises the step of: expressing by a Clarke transformation, or an alpha-beta transformation, said modified sinusoids into centered and circularized ellipses.

In a development, p is associated with a precision level of the calibration in excess of a predefined precision level.

In a development, the interferometer is a Multi-Mode Interference coupler-based Mach-Zehnder interferometer.

There is described a system comprising a processor configured to: receive data signals from an interferometer; accumulate at least p > 2 arches forming k sinusoids with phase shift of 2π/k; calibrate the k sinusoids; determine the angular phase associated with said k sinusoids.

In a development, the system further comprises an interferometer, with receptors to compounds placed in a sensing arm of said interferometer.

In a development, the interferometer is a Mach-Zehnder Interferometer based on one or more Multi-Mode Interference couplers.

In a development, the interferometer is one or more of a Fizeau interferometer, a Fabry-Perot interferometer, a Jamin interferometer, a Ramsey-Borde interferometer or a Michelson interferometer, or a combination thereof.

In a development, the system further comprises one or more processors which is further configured to: determine a sensorgram designating the temporal evolution of data signals, so as to extract interaction kinetics of adsorption and desorption of target compounds with receptors placed in one optical path of the interferometer; determine a signature associated with an odor.

In a development, the MMI is a (2xN) MMI, with two inputs and N outputs, or a (2x3) MMI, with two inputs and three outputs.

In a development, a plurality of said (2xN) MMI based - MZIs correspond to a plurality of peptides binding to Volatile Organic Compounds.

In a development, the interferometer is a micro interferometer embedded in a smartwatch.

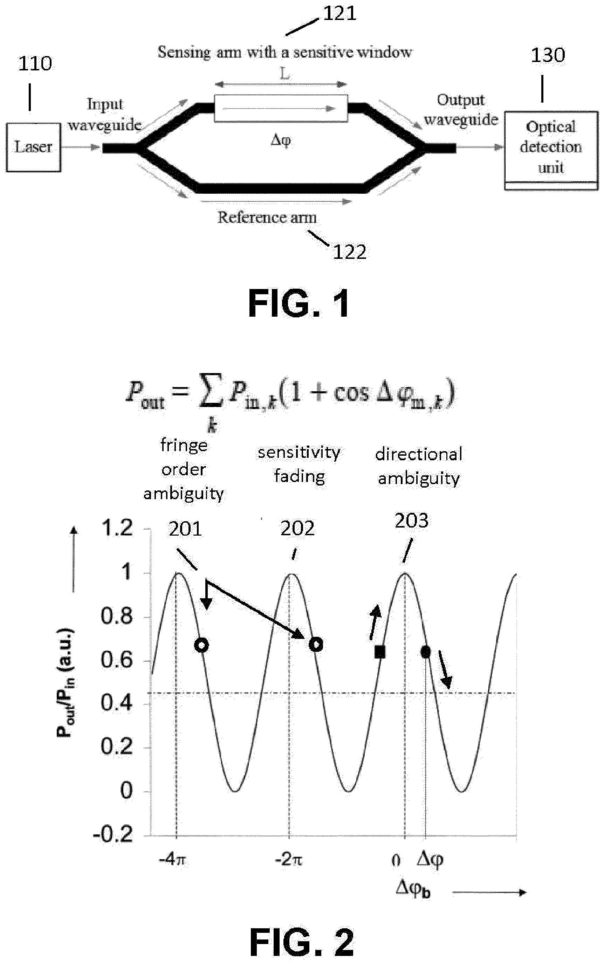

FIG. 1 illustrates components of a Mach-Zehnder Interferometer (MZI).

In an embodiment, the methods and systems according to the invention use a Mach-Zehnder interferometer.

In an embodiment, the multivariate sensor comprises a Mach-Zehnder interferometer. Such an interferometer uses laser coherent pulses. One first beam or optical path traverses peptides and fluid sample, and is thus phase is changed. One second beam or optical path without change in phase then interferes with the first beam. Measures can then be interpreted.

In physics, a Mach-Zehnder interferometer is a device used to determine the relative phase shift variations between two guided coherent beams derived by splitting light from a single source. The interferometer can be used to measure phase shifts between the two beams caused by a sample or a change in length or refractive index of one of the paths.

In an embodiment, the sensor comprises an optical integrated circuit comprising: a lower layer called substrate; a first coupling means adapted to couple a radiation incident light to the integrated optical circuit; a directional splitter connected to the first coupling means and configured to separate the light radiation coupled by the first means from the second means coupling to at least one pair of waveguides comprising: a first waveguide known as a sensitive arm in which is propagated a first portion of the light radiation, said sensitive arm being exposed to a first ambient medium and at least one compound to be detected that induces a modification of the local refractive index perceived by the evanescent part of the electromagnetic field of the first portion of the light radiation, and a second waveguide called a reference arm in which is propagated a second portion of the light radiation, an encapsulation layer encapsulating the reference arm, said layer being impermeable to the compound(s) to be detected, so as to be able to detect that the reference arm is exposed only to a second medium the same nature as the first ambient environment, and devoid of said compound to be detected ; a directional combiner combining the first portion of the radiation from said reference arm, called the first transmitted portion, and the second portion of the light radiation from said sensitive arm, called the "sensitive arm" second transmitted portion, to form a transmitted radiation ; second coupling means adapted to couple said radiation; and transmitted to a medium external to the integrated optical circuit; an upper layer called superstrate covering at least the first and the second layers of the optical integrated circuit; second coupling means, the directional separator and the combiner directional and does not cover the sensitive and reference arm, said encapsulation layer being deposited on top of the superstrate.

In an embodiment, the sensitive arm and the reference arm are spiral waveguides. In an embodiment, the integrated optical circuit comprises a layer called functionalization layer. In an embodiment, the sensitive arm and the reference arm are spiral waveguides. In an embodiment, the integrated optical circuit comprises a layer called functionalization layer, at least partially covering the sensitive arm and adapted to adsorb one of the compounds to be detected ; In an embodiment, the optical integrated circuit comprises a so-called compensation layer covering at least partially the reference arm, a thickness of the compensation layer being equal to or higher than that of the compensation layer functionalization before adsorption of the compound to be detected. In an embodiment, the encapsulation layer is porous in the first medium of to allow a regulation of the hydrometric degree or of the osmotic pressure of the second medium relative to the first one ambient environment. In an embodiment, the encapsulating layer is made of glass, or silicon, polymer or metal. In an embodiment, the encapsulation layer is a deformable membrane. In an embodiment, an assembly formed by said directional separator, said reference arm, said encapsulation layer, sensing arm and combiner is called an interferometric set, the said optical circuit is called a directional optical circuit integrated with at least one additional directional separator configured to separate the light radiation coupled by the first means of coupling to a plurality of interferometric sets, and comprising a plurality of second coupling means, each comprising a plurality of second coupling means adapted to couple the radiation transmitted by an assembly different interferometric to a medium outside the optical integrated circuit. In an embodiment, the sensitive arm of each interferometric assembly includes a so-called functionalization layer covering at least partially the arm sensitive and adapted to adsorb one of the compounds to be detected, each functionalization layer being adapted to adsorb a compound to be used as a detect different from those adsorbed by the other layers of functionalization covering the sensitive arm of the others of sets Interferometric. In an embodiment, the reference arm of each interferometric assembly is encapsulated individually; the thickness of the individual encapsulation layer is less than 500 microns. In an embodiment, the reference arms of the interferometric assemblies are encapsulated collectively, so as to form a uniform encapsulation layer and without discontinuity. In an embodiment, the thickness of the individual encapsulation layer is between 5 microns and 2000 microns.

In an embodiment, the sensor comprises: a laser source configured to emit incident light radiation; an integrated optical circuit according to the invention; an optical detection system adapted to detect a light radiation; - an integrated optical circuit according to the invention from the second coupling means and generate a signal representative of the evolution over time of the detected light intensity; a unit for processing the said signal, adapted to determine, from the intensity detected, the evolution over time of the phase shift between the first portion and the second portion transmitted and the second portion transmitted.

In physics, a Mach-Zehnder interferometer is a device used to determine the relative phase shift variations between two guided coherent beams (121, 122) derived by splitting light from a single source 110. The interferometer can be used to measure phase shifts between the two beams caused by a sample or a change in length or refractive index of one of the paths.

In an embodiment, a MZI can use laser coherent pulses. One first beam or optical path traverses *peptides* (used to sense compounds associated with an odor) and fluid sample, and is thus phase is changed. One second beam or optical path without change in phase then interferes with the first beam. Measures can then be interpreted.

In some embodiments of the invention, a MZI can be replaced by one or more of a Fizeau interferometer, a Fabry-Perot interferometer, a Jamin interferometer, a Ramsey-Borde interferometer or a Michelson interferometer (or a combination thereof).

In an embodiment, the MZI is a *micro-*MZI (a few millimeters in length for the order of magnitude).

### Other sensor embodiments

In an advantageous embodiment, peptides are used. Peptides are short chains of between two and fifty amino acids, linked by peptide bonds. Chains of fewer than ten or fifteen amino acids are called oligopeptides, and include dipeptides, tripeptides, and tetrapeptides. A "polypeptide" is a longer, continuous, unbranched peptide chain of up to approximately fifty amino acids. Hence, peptides fall under the broad chemical classes of "biological polymers and oligomers", alongside nucleic acids, oligosaccharides, polysaccharides, and others.

In some embodiments of the invention, polymers (on silicon or derivative materials like SiO2 or other traditional materials in micro-machining MEMS or silicon photonics) can be used. Silicon is a chemical element with the symbol Si and atomic number 14. It is a semiconductor.

In some embodiments, piezo resistance mechanisms can be used.

In some embodiments, living cells can be used.

In some embodiments, combinations of the above means can be used, e.g. a combination of peptides and polymers. Depending on use cases (i.e. general purpose or specific detection), the number and/or types of sensor units are diverse.

FIG. 2 illustrates some technical issues associated with a Mach-Zehnder interferometer (MZI).

A Mach-Zehnder interferometer, when used alone, is associated with several technical issues.

The first issue relates to the *fringe order ambiguity (201):* the same value is observed for *Pₒᵤₜ*/*Pᵢₙ* for Δ*ϕₘ* and *Δϕₘ* + 2 * π.

A second problem relates to *sensitivity fading (202):* a change of Δ*ϕₘ* vanishing near the extrema (maxima and minima) of *Pₒᵤₜ*/*Pᵢₙ.*

At last, there remains a *directional* ambiguity (203): the direction of the change of Δ*ϕₘ* cannot be deduced from *P*_{*out*/}*Pᵢₙ.* In particular, the direction is physically tied with either absorption or desorption (e.g. of VOCs binding with peptides in the sensing arm).

Different circuits can be used in/for/with MZIs, for example directional couplers (DC), Y-splitters, star couplers and also interference (MMI) structures.

With respect to the technical difficulties previously described, it is advantageous to use one or more Multi-Mode Inference (acronym MMI), which are optical couplers, i.e. splitters and combiners.

The resulting device is called "MMI-based MZI", or a "MZI using MMI", or "MMI-MZI" or the like in the literature.

A multi-mode interferometer (MMI), also known as a multimode interference coupler, is a micro-scale structure in which light waves can travel, such that the optical power is split or combined in a predictable way. In an MMI, light is confined and guided, and thus the MMI is an optical waveguide.

In other words, a Multi-Mode Interference coupler (MMI) is an optical splitter and combiner which can provide precise splitting with low loss, high thermal stability, large optical bandwidth, high compactness, and insensitivity to fabrication tolerances. Multimode interference (MMI) Mach-Zehnder optical switches consist of MMI splitters and recombiners interconnected by single mode guides, which act as phase shifters.

The use of such MMIs contributes solving the three above-mentioned difficulties (i.e. *fringe order ambiguity, sensitivity fading, directional* ambiguity)
MMIs can be built in diverse ways. They generally can handle i inputs and j outputs, with j>i. So called "hybrid MMI-MZI" for example can be of (2x4) type (2 inputs, 4 outputs)
Several types of MMI can be found, achieving different compromises, which are now discussed.

Advantageously, in an embodiment of the invention, a MMI can be a (2xN) type MMI, with 2 inputs and N outputs. These device can require a complicated calibration, with many parameters to compute. Advantageously with such a device, *directional ambiguity* can be solved and there is a very low *sensitivity fading.* Also, this device is more robust to channel imperfections (in the case of no calibration). Nevertheless, such device is difficult to manufacture (thus expensive, if N is high). Optimizing the sensor design remains a challenge.

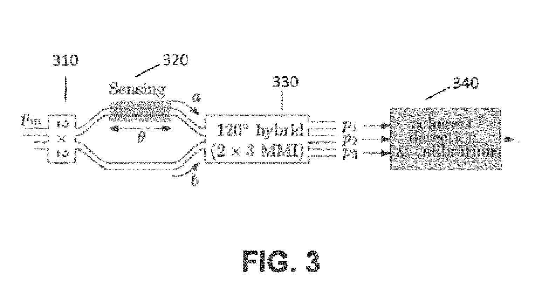

FIG.3 shows an MZI-MMI based of (2x3) type.

Advantageously, in an embodiment of the invention, a MMI is specifically a (2x3) type MMI, with 2 inputs and 3 outputs. This configuration achieves superior compromises for targeted wearable use cases.

The described MMI presents 2 inputs 310 and 3 interfering outputs 330 (p1, p2, p3).

Signal processing of p1, p2 and P3 aims at estimating θ (theta), which relates to the binding of peptides with VOCs in the sensing arm 320.

In an embodiment of the invention, using a MZI with a (2x3) type MMI, a specific and advantageous calibration can be performed 340.

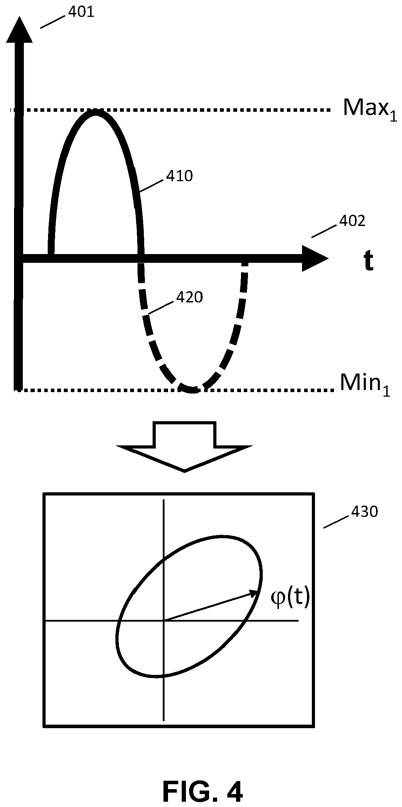

FIG.4 shows a 3 phase Clarke transformation and the handling of non-centered ellipses.

In the described example, the phase shift (variable theta) in provided in 3 sinusoid time series each shifted by 120° (2π/3) between each other (three-phased signals). This in particular is necessary and sufficient to know the progress of the phase (decreasing or increasing).

The figure shows for example grey level values in ordinate 401, over time in abscissa 402.

The two arches (410, 420) form a period of the sinusoid.

In physics, the phase of a periodic function F of some real variable t (such as time) is an angle representing the number of periods spanned by that variable. It is phi (t) and expressed in such a scale that it varies by one full turn as the variable t goes through each period (and F(t) goes through each complete cycle). It may be measured in any angular unit such as degrees or radians, thus increasing by 360° or 2π as the variable t completes a full period.

For a sinusoidal function, its value at any argument t then can be expressed as the sine of the phase phi (t), multiplied by the gain or amplitude of the sinusoid.

This sinusoid can be represented in a non-centered ellipse (via a Clarke transformation). A k-phases Clark transformation allows to project the k-phase signal into 3-dimensional space *{I, Q*, *0}.* If the sensor hardware is perfect, the projection on axe *0* is zero and the two projections on the {*I, Q*} plan create a centered circle. Because of imperfections, non-centered ellipses are obtained.

In electrical engineering, the "Clarke transformation" is also known as the "alpha-beta" transformation. The mathematical transformation employed to simplify the analysis of three-phase circuits.

Known methods generally consist in extracting the information from three modulated signals, reconstructing an angular phase from these 3 modulated signals. The associated temporal phase, travels a circular trajectory. When the gains and offsets of the 3 curves are not identical, the trajectory is distorted and becomes a non-centered ellipse (430). Then, the obtained model ellipse is centered and circularized to correct the angular phase.

Known methods for *ellipse fitting* are computation-intensive. By contrast, the described calibration (infra) is effective, fast and save computations. It thus can be embedded in a wearable device (for example a smartwatch).

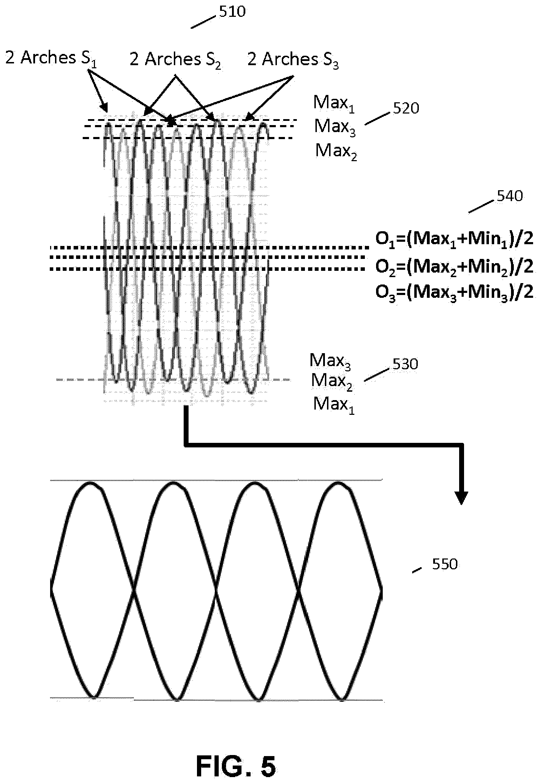

FIG.5 shows an embodiment of an example of a calibration step according to the invention.

The figure 5 shows three arches 510 (S1, S2 and S3), with associated maximal values 520 and minimal values 530. Associated offsets 540 can be determined.

Calibrated sinusoids 550 can be obtained, by computing specific offsets.

Then, it becomes possible to estimate θ (and thus determine and qualify the binding of peptides with VOCs in the sensing arm of the MMI-based micro MZI.

In an embodiment, the calibration step comprises the step of accumulating at least p >= 2 arches, p being associated by a precision level of the calibration in excess of a predefined precision level (not shown).

Advantageously, the more arches accumulated, the more precise the calibration.

In an embodiment, the method further comprises, for each of three sinusoids I, determining the values Maxi and Mini; determining an offset equal to the mean value of Maxi and Mini; and determining a gain equal to 1/(Maxi-Mini).

In an embodiment, the method further comprises the step of determining a correction gain by determining the maximal gain amongst the determined three gains.

In an embodiment, the method further comprises the step of determining a modified sinusoid by subtracting the respective offsets to the received sinusoid, multiplied by the ratio of the correction gain by the maximum gain.

Other embodiments are now described.

In a development, there is described a computer-implemented method comprising the steps of: receiving data signals from an interferometer, said data signals comprising at least k sinusoids with phase shift of 2π/K; expressing said sinusoids in non-centered ellipses; calibrating said sinusoids by centering and circularizing said non-centered ellipses; and determining the angular phase from said centered and circularized ellipses. In a development, the method further comprises the step of determining a sensorgram designating the temporal evolution of data signals, so as to extract interaction kinetics of adsorption and desorption of target compounds with receptors e.g. peptides placed in the sensing arm of the interferometer. In a development, the method further comprises the step of determining a signature associated with an odor. In a development, the step of calibrating the sinusoids comprises the step of accumulating at least 2 sinusoidal arches. In a development, the step of calibrating the sinusoids comprises the step of accumulating at least p > 2 arches, p being associated by a precision level of the calibration in excess of a predefined precision level. In a development, the method further comprises the step of, for each of three sinusoids I, determining the values Maxi and Mini; determining an offset equal to the mean value of Maxi and Mini; and determining a gain equal to 1/(Maxi-Mini). In a development, the method further comprises the step of determining a correction gain by determining the maximal gain amongst the determined three gains. In a development, the method further comprises the step of determining a modified sinusoid by subtracting the respective offsets to the received sinusoid, multiplied by the ratio of the correction gain by the maximum gain. In a development, the step of expressing said sinusoids in non-centered ellipses corresponds to a Clarke transformation or an alpha-beta transformation. In a development, the interferometer is a Multi-Mode Interference coupler-based Mach-Zehnder.

In an embodiment, the method comprises the steps of: receiving gain and offset values from a server or processing unit; determining calibration values in said or another server or processing unit; applying said values to calibrate one or more sensors, e.g. by flashing firmware of an electronic nose. In a development, upon request, the method further comprises the step of reiterating the preceding steps.

The disclosed methods can take form of an entirely hardware embodiment (e.g. FPGA), an entirely software embodiment or an embodiment containing both hardware and software elements. Software embodiments include but are not limited to firmware, resident software, microcode, etc. The invention also can take the form of a computer program product accessible from a computer-usable or computer-readable medium providing program code for use by or in connection with a computer or any instruction execution system. A computer-usable or computer-readable can be any apparatus that can contain, store, communicate, propagate, or transport the program for use by or in connection with the instruction execution system, apparatus, or device. The medium can be an electronic, magnetic, optical, electromagnetic, and/or semiconductor system (or apparatus or device) or a propagation medium or the like.

There is disclosed a computer program comprising instructions for carrying out one or more of the steps of the method when said computer program is executed on a computer device.

## Claims

1. A computer-implemented method comprising the steps of:
- receiving data signals from an interferometer;
- accumulating at least p > 2 arches forming k sinusoids with phase shift of 2π/k;
- calibrating the k sinusoids;
- determining the angular phase associated with said k sinusoids.

2. The method of Claim 1, further comprising the steps of:
- determining a sensorgram associated with the temporal evolution the angular phase;
- determining interaction kinetics of adsorption and/or desorption of target compounds with receptors, e.g. peptides, placed in the sensing arm of the interferometer.

3. The method of Claim 2, further comprising the step of determining a signature associated with an odor composed of target compounds.

4. The method of Claim 1, wherein the step of calibrating comprises the steps of:
- iteratively determining intermediate values Maxi and Mini computed over the accumulated sinusoids;
- determining an offset equal to the mean value of Maxi and Mini;
- determining a gain equal to 1/(Maxi-Mini);
- determining a correction gain by determining the maximal gain amongst the determined gains;
- determining a modified sinusoid by subtracting the respective offsets to the received sinusoid, multiplied by the ratio of the correction gain by the maximum gain.

5. The method of Claim 1, wherein the step of calibrating comprises the step of:
- expressing by a Clarke transformation, or an alpha-beta transformation, said modified sinusoids into centered and circularized ellipses.

6. The method of any preceding Claim, wherein p is associated with a precision level of the calibration in excess of a predefined precision level.

7. The method of any preceding Claim, wherein the interferometer is a Multi-Mode Interference coupler-based Mach-Zehnder interferometer.

8. A system comprising a processor configured to:
- receive data signals from an interferometer;
- accumulate at least p > 2 arches forming k sinusoids with phase shift of 2π/k;
- calibrate the k sinusoids;
- determine the angular phase associated with said k sinusoids.

9. The system of Claim 8, further comprising an interferometer, with receptors to compounds placed in a sensing arm of said interferometer.

10. The system of claim 8, wherein the interferometer is a Mach-Zehnder Interferometer based on one or more Multi-Mode Interference couplers.

11. The system of claim 8, wherein the interferometer is one or more of a Fizeau interferometer, a Fabry-Perot interferometer, a Jamin interferometer, a Ramsey-Borde interferometer or a Michelson interferometer, or a combination thereof.

12. The system of claim 8, wherein a processor is further configured to:
- determine a sensorgram designating the temporal evolution of data signals, so as to extract interaction kinetics of adsorption and desorption of target compounds with receptors placed in one optical path of the interferometer;
- determine a signature associated with an odor.

13. The system of claim 8, wherein the MMI is a (2xN) MMI, with two inputs and N outputs, or a (2x3) MMI, with two inputs and three outputs.

14. The system of claim 13, wherein a plurality of said (2xN) MMI based - MZIs correspond to a plurality of peptides binding to Volatile Organic Compounds.

15. The system of any of Claim 8 to 14, wherein the interferometer is a micro interferometer embedded in a smartwatch.
